# EUROPÄISCHE PATENTANMELDUNG

(11) **EP 0 913 599 A2**
(43) Veröffentlichungstag der Anmeldung: **06.05.1999**
(21) Anmeldenummer: 98117353.7
(22) Anmeldetag: 14.09.1998
(51) Int. Cl.: F16F 7/12

(54) **Energieabsorbierend wirksames Bauelement für Fahrzeuge**

(30) Priorität: 31.10.1997 DE 29719362 U
(71) Anmelder: Adwest Heidemann Einbeck GmbH, 37574 Einbeck (DE)
(72) Erfinder: Altrath, Hans-Dieter, 37574 Einbeck (DE); Hibben, Michael, 37574 Einbeck (DE)
(74) Vertreter: Sobisch, Peter, Dipl.-Ing.

(57) **Zusammenfassung**

Ein unter Energieabsorption nach Maßgabe eines definierten Verschiebeweges längenveränderbares, zur Übertragung von Kräften in Richtung seiner Achse (3) eingerichtetes Bauelement ist durch wenigstens zwei, jeweils nach Durchlaufen von Teilabschnitten des gesamten möglichen Verschiebeweges wirksam werdende Umformabschnitte (5', 12') gekennzeichnet, wobei jedem Umformabschnitt ein, relativ zu dem Bauelement ortsfest angeordnetes Umformprofil zugeordnet ist, wobei die Energieabsorption auf der, unter plastischer Verformung eingerichteten Relativbewegung des Umformabschnitts relativ zu dem Umformprofil beruht. Den Umformabschnitten sind unterschiedliche Umformkräfte zugeordnet, so daß sich beispielsweise entlang des gesamten Verschiebeweges eine progressive Kraftaufnahmecharakteristik ergibt. Die Umformabschnitte werden ausschließlich durch die Außenseiten von Hohlprofilen gebildet, die mit dem jeweiligen Umformprofil im Eingriff stehen. Auf diese Weise ergibt sich eine einfache Montierbarkeit des Bauelements und eine bauvolumensparende Bauweise, bei der die Hohlprofile spielfrei ineinander geführt sind. Die geometrischen und werkstofflichen Verhältnisse von Umformprofil und Umformabschnitt können in Verbindung mit der Längenbemessung der diesen jeweils zugeordneten Teilabschnitte des gesamten Verschiebeweges in Abhängigkeit von der umzusetzenden kinetischen Energie bemessen werden. Das Bauelement findet vorzugsweise Anwendung als Teil einer Lenksäule, insbesondere eines Lenkungsschutzrohres.

## Beschreibung

Die Erfindung bezieht sich auf ein Bauelement entsprechend dem Oberbegriff des Anspruchs 1.

Energieabsorbierend wirksame Bauelemente sind im Kraftfahrzeugbau in unterschiedlichen Funktionszusammenhängen bereits bekannt geworden. Ihr Zweck besteht darin, im Kollisionsfall umgesetzte kinetische Energie zu binden, und zwar mit dem Ziel, Insassen des Fahrzeugs vor Verletzungen zu schützen und darüber hinaus kollisionsbedingte Schadwirkungen am Fahrzeug zu begrenzen. Das physikalische Prinzip der Energieabsorption kann beispielsweise in einer plastischen Verformung metallischer Strukturelemente bestehen, so daß die genannten Bauteile nach einem Kollisionsfall auszutauschen sind.

Aus der DE 43 00 284 ist ein energieabsorbierendes Bauelement bekannt, welches zur Abstützung des Stoßfängers eines Kraftfahrzeugs bestimmt ist. Das Bauelement besteht aus zwei, teleskopartig ineinander geführten und zueinander koaxialen Hohlprofilen, wobei an wenigstens einer Stelle ein beispielsweise durch eine Einschnürung gebildetes Umformprofil vorgesehen ist, durch welches im Falle einer Relativbewegung der Hohlprofile zueinander das innere Hohlprofil eine plastische Verformung erfährt. Die Einschnürung wird durch eine außenseitig eingebrachte, beide Hohlprofile durchdringende, sickenartige Vertiefung hergestellt, die durch eine Schweißnaht ausgefüllt ist, so daß das Umformprofil die erforderliche Steifigkeit erhält. An dem inneren Hohlprofil kann der Stoßfänger befestigt sein, wohingegen das äußere Hohlprofil mit dem Fahrgestellrahmen in fester Verbindung steht. Wesensmerkmal dieses Bauelements ist eine über den Verformungsweg im wesentlichen konstante Umformkraft. Die Herstellung dieses Bauelements gestaltet sich jedoch vergleichsweise aufwendig.

Aus der DE 195 29 370 ist ein weiteres, zur Befestigung der Stoßfänger eines Fahrzeugs bestimmtes Bauelement bekannt, dessen Funktionsprinzip auf zwei, koaxial ineinander geführten Hohlprofilen beruht, wobei wiederum ein Umformprofil vorgesehen ist, durch welches eine Relativverschiebung der Hohlprofile lediglich unter plastischer Verformung möglich ist. Das Umformprofil wird durch wenigstens eine Anordnung kugelartiger Formkörper gebildet, die jeweils in eine, beide Hohlprofile von der Außenseite her durchdringende Einformungen eingesetzt sind und deren radiale Position außenseitig durch einen Haltering fixiert ist. Eine Relativbewegung der Hohlkörper in deren Achsrichtung führt auf diesem Wege zur Ausbildung einer längsnutartigen Verformung des inneren Hohlkörpers, und zwar entlang eines konstruktiv vorgegebenen Verformungsweges. An dem inneren Hohlprofil kann wiederum der Stoßfänger befestigt sein, wohingegen das äußere Hohlprofil und der genannte Haltering am Fahrzeugrahmen befestigt sind. Mittels mehrerer derartiger Umformprofile oder auch durch Erhöhung der Zahl der Formkörper kann die Energieabsorptionsfähikeit dieses Bauelements konstruktiv erhöht werden.

Schließlich ist aus der US 4 445 708 ein weiteres derartiges Bauelement bekannt, dessen Funktionsprinzip auf koaxial ineinandergeführten, energieabsorbierenden geführten Hohlkörpern beruht. Dieses Bauelement bildet einen Teil der Lenksäule eines Fahrzeugs, nämlich des zur Führung der Lenkwelle bestimmten und eingerichteten Lenkungsschutzrohres. Wesensmerkmal dieses Bauelements sind unterschiedliche, nach Durchlaufen definierter Verformungswege nacheinander wirksam werdende Umformprofile, so daß sich - über den gesamten Verschiebeweg gesehen - eine progressive Charakteristik der aufzuwendenden Umformkräfte ergibt. Ein erstes Umformprofil wird durch eine Anordnung kugelartiger Formkörper gebildet, die mittels eines aus Kunststoff bestehenden Führungskäfigs in dem Zwischenraum zwischen dem äußeren und dem inneren Hohlprofil gehalten sind und die bei einer Relativbewegung der Hohlprofile in der Innenseite des äußeren Hohlprofil einerseits und der Außenseite des inneren Hohlprofil andererseits gleichzeitig längsnutartige Verformungen erzeugen. Ein weiteres Umformprofil wird durch eine konische Verjüngung des äußeren Hohlprofils gebildet, die innenseitig durch rampenartige Ansätze gekennzeichnet ist, die zum Zusammenwirken mit den Formkörpern bestimmt sind. Schließlich wird ein weiteres Umformprofil durch eine konische Erweiterung des inneren Hohlprofils gebildet, welche sich an dem, den genannten Rampenteilen gegenüberliegenden Ende des Bauelements befindet. Die beiden letztgenannten Verformungsprofile gelangen nacheinander zum Einsatz und es sind die diesen zugeordneten Teilabschnitte des Verschiebeweges durch eine, durch die Konizität der Hohlprofile bedingte progressive Charakteristik der aufzuwendenden Umformkräfte gekennzeichnet. Von Vorteil ist bei diesem Bauelement, daß durch entsprechende Dimensionierung der den einzelnen Umformprofilen jeweils zugeordneten Umformabschnitte eine maßgeschneiderte Kraftaufnahmefähigkeit gegeben ist, so daß bei lediglich leichten Kollisionen eine relativ weiche Kraftaufnahme stattfindet und eine höhere Inanspruchnahme des genannten Bauelements erst bei relativ schwereren Kollisionen gegeben ist. Eine solche progressive Aufnahmecharakteristik bietet insgesamt einen erhöhten Komfort für die Nutzer des Fahrzeugs. Es wird eine solche Charakteristik bei diesem Bauelement jedoch in einer konstruktiv verhältnismäßig komplizierten Weise bereitgestellt.

Es ist die Aufgabe der Erfindung, ein energieabsorbierend wirksames Bauelement der eingangs bezeichneten Gattung dahingehend auszugestalten, daß die Kraftaufnahmecharakteristik in konstruktiv einfacher Weise variierbar ist. Gelöst ist die Aufgabe bei einem solchen Bauelement durch die Merkmale des Kennzeichnungsteils durch die Merkmale des Anspruchs 1.

Erfindungswesentlich ist, daß sämtliche Umformabschnitte ausschließlich durch Außenseiten von Hohlprofilen gebildet werden, so daß Umformprofile, durch welche in Verbindung mit dem Umformabschnitt eine Energieabsorption ermöglicht wird, lediglich außenseitig mit den Hohlprofilen in Eingriff gelangen. Jeder Umformabschnitt wirkt mit einem an diesen angepaßten Umformprofil zusammen, welches während des Umformprozesses gegenüber dem Umformabschnitt ortsfest gehalten ist, so daß die plastische Verformung des Umformabschnitts durch eine Relativbewegung desselben gegenüber dem Umformprofil darstellbar ist. Die geometrischen und werkstofflichen Verhältnisse von Umformprofil und Umformabschnitt können in Verbindung mit der Längenbemessung der diesen jeweils zugeordneten Teilabschnitte des gesamten Verschiebeweges in Abhängigkeit von der umzusetzenden kinetischen Energie bemessen werden. Zur Erhöhung des Energieumsatzes entlang eines Teilabschnitts kann dieser auch mit mehreren Umformabschnitten versehen werden, denen jeweils Umformprofile zugeordnet sind. Die Verteilung der Umformabschnitte und Umformprofile entlang des gesamten Verschiebeweges ist in jedem Fall derart bemessen, daß sich - entlang des gesamten Verschiebeweges gesehen - eine Zunahme der aufzuwendenden Umformkräfte ergibt. Dadurch, daß jedes Umformprofil ausschließlich mit der Außenseite des jeweiligen Umformabschnitts im Eingriff steht, ergibt sich eine einfache Montierbarkeit des Bauelements, nachdem - in Abweichung von dem eingangs dargelegten Stand der Technik - sich jedenfalls keine Funktionselemente des Umformprofils zwischen den Hohlprofilen befinden. Dies ermöglicht ferner eine bauvolumeneinsparende Bauweise, so daß die Hohlprofile spielfrei ineinandergeführt sind. Zwar ist eine Plazierung der Umformprofile auch auf der Innenseite der Hohlprofile denkbar - aus montagetechnischen Gründen sowie aus Gründen der Nutzung des In nenraums der Hohlprofile wird jedoch einer außenseitigen Anordnung der Umformprofile der Vorzug gegeben.

Gemäß den Merkmalen des Anspruchs 2 ist ein zumindest zweiter Umformabschnitt durch eine ineinandergesteckte Anordnung des ersten und eines zweiten Hohlprofils gebildet. Dies bedeutet, daß eine plastische Verformung im Bereich des zweiten Umformabschnitts stets eine gleichzeitige Verformung beider ineinandergesteckter Hohlprofile ist, die demzufolge im Verhältnis zu dem ersten, durch lediglich ein Hohlprofil gekennzeichneten Umformabschnitt durch einen entsprechend erhöhten Kraftaufwand für die Umformung gekennzeichnet ist. Durch die - in Richtung des Verschiebeweges gesehen - Hintereinanderanordnung wenigstens zweier Teilabschnitte desselben, wobei der dem zweiten Teilabschnitt zugeordnete Umformabschnitt in diesem Sinne gebildet ist, ergibt sich eine - in Richtung des gesamten Verschiebeweges gesehen - zunehmende bzw. progressive Charakteristik der Energieumsetzung, wonach in dem ersten Teilabschnitt zur Energieumsetzung ein beispielsweise konstanter, relativ niedriger Kraftaufwand und in dem sich anschließenden zweiten Teilabschnitt ein erhöhter Kraftaufwand erforderlich ist. Die Charakteristik der Kraftaufnahme während der Längenveränderung des Bauelements kann auf diese Weise den Bedürfnissen des Belastungsfalls angepaßt werden.

Innerhalb eines Teilabschnitts des Verschiebeweges kann die aufzuwendende Umformkraft konstant sein, dies ist jedoch nicht notwendig und es kommt gleichermaßen beispielsweise auch eine progressive oder sonstige ansteigende Charakteristik in Betracht.

Gemäß den Merkmalen des Anspruchs 3 wird der Erfindungsgegenstand dahingehend weiter ausgestaltet, daß durch Vervielfachung der teilweise ineinandergesteckten Hohlprofile eine weitergehendere Abstufung der Energieabsorbtion entlang des maximalen Verschiebeweges möglich ist.

Die aufeinanderfolgenden Umformabschnitte unterscheiden sich hinsichtlich der Zahl der ineinandergesteckten, während des Umformprozesses entlang des jeweils zugeordneten Teilabschnitts gleichzeitig zu verformenden Hohlprofile und - hiermit zusammenhängend - durch die den jeweiligen Teilabschnitten zuzuordnenden Umformkräfte. Erfindungsgemäß sind dem gesamten Verschiebeweg wenigstens zwei Umformabschnitte zugeordnet. Diese Umformabschnitte können entsprechend den Merkmalen der Ansprüche 4 und 5 nacheinander mit dem Umformabschnitt in Eingriff gelangen. Dies bedeutet, daß das - in Verschieberichtung gesehen zweite Umformprofil erst dann zum Eingriff gelangt, nachdem das erste Umformprofil am Ende seines Eingriffsbereich angelangt ist. Es können jedoch die Eingriffsbereiche beider Umformprofile - entlang des Verschiebeweges gesehen - einander auch wenigstens teilweise überdecken, so daß während wenigstens eines Teiles des gesamten Verschiebeweges beide Umformprofile wirksam sind. Im einfachsten Fall können auf einem Hohlprofil zwei Umformabschnitte vorgesehen sein, denen jeweils unterschiedliche Umformprofile zugeordnet sind, wobei die Verteilung der Umformprofile mit der Maßgabe erfolgt, daß sich - in Verschieberichtung gesehen - ein zunehmender Verlauf der aufzuwendenden Umformkräfte ergibt.

Die Merkmale der Ansprüche 6 und 7 sind auf die nähere Ausgestaltung des Umformprofils gerichtet. Wesentliches Element dieses Umformprofils ist hiernach wenigstens ein Formkörper, der während der plastischen Verformung des zugeordneten Umformabschnitts gegenüber diesem ortsfest gehalten ist und sich somit während der Relativbewegung in die Substanz des Umformabschnitts einprägt. Im einfachsten Fall ist lediglich ein derartiger Formkörper vorgesehen. Regelmäßig werden in einer, zur Achse der Hohlkörper senkrechten Ebene jedoch mehrere Formkörper vorgesehen sein. Ergänzend hierzu besteht auch die Möglichkeit mehrere axial beabstandete Umformprofile dadurch zu bilden, daß in mehreren derartigen Ebenen jeweils Formkörperanordnungen untergebracht sind, die während der Bewegungen entlang des jeweiligen Teilabschnitts des Verschiebewegs gleichzeitig, nacheinander oder auch einander zeitlich wenigstens teilweise überdeckend zum Einsatz gelangen.

Die Merkmale der Ansprüche 8 bis 15 sind auf alternative Techniken zur Variierung der Energieabsorptionsfähigkeit bzw. zur Einstellung der Charakteristik der aufzunehmenden Umformkräfte gerichtet. Die den einzelnen Umformabschnitten bzw. Umformprofilen zugeordneten Formkörper können beispielsweise eine identische Größe aufweisen. Zur Erhöhung der durch die Formkörper zu übertragenden Umformkraft können die Formkörper der Umformprofile, die - in Richtung des gesamten Verschiebeweges - aufeinanderfolgenden Teilabschnitten desselben zugeordnet sind, im Vergleich zu dem Formkörpern der Umformprofile des jeweils vorangegangenen Teilabschnitts größer bemessen sein, so daß auch auf diesem Wege die dem einzelnen Teilabschnitt zuzuordnende Umformkraft variierbar ist. Ziel kann es sein, die den einzelnen Teilabschnitten des Verschiebeweges zugeordneten Umformkräfte derart zu staffeln, daß sich - entlang des Verschiebeweges gesehen - ein zunehmender bzw. progressiver Charakter der aufzuwendenden Umformkräfte ergibt, der quantitativ in der oben dargelegten Weise konstruktiv beeinflußbar ist. Zur Variierung der aufzuwendenden Umformkräfte können bei den einzelnen Umformprofilen ferner die Zahl der eingesetzten Formkörper, die Wanddicken der Hohlprofile und deren Werkstoffe variiert werden. Eine erhöhte Wanddicke und gleichermaßen ein anderer Werkstoff mit anderen Verformungseigenschaften kann als Mittel zur Erhöhung der Energieabsorptionsfähigkeit herangezogen werden. In jedem dieser Fälle ergibt sich nach Maßgabe der Zahl der Verformungsabschnitte eine abgestufte Charakteristik der Energieabsorption. Es ist jedoch gleichermaßen möglich, den Wanddickenverlauf des einzelnen Hohlprofils mit der Maßgabe zu wählen, daß dieser beispielsweise in Richtung des gesamten Verschiebeweges stetig zunimmt, so daß sich entlang des einzelnen Umformabschnitts eine kontinuierliche Zunahme der Umformkraft ergibt.

Weitere Variationen können darin bestehen, daß - entlang des gesamten Verschiebeweges gesehen - mehrere derartige Teilabschnitte mit konischem Wandungsverlauf vorgesehen sind, die wiederum nacheinander, gleichzeitig oder wenigstens teilweise gleichzeitig zum Einsatz gelangen, so daß sich weitere Variationsmöglichkeiten der Charakteristik der Umformkraft ergeben. Es können die Umformabschnitte nebst zugeordneten Umformprofilen jedoch auch derart ausgebildet sein, daß sich zumindest abschnittsweise - in Richtung des Verschiebeweges gesehen - eine Abnahme der aufzuwendenden Umformkräfte ergibt.

Die Merkmale der Ansprüche 16 und 17 sind auf die Anordnung der Formkörper gerichtet. Diese befinden sich hiernach in radial außenseitig offenen, sich vorzugsweise an den Enden des jeweiligen Hohlprofils des Führungsrohres befindlichen Einformungen und sind in diesen mittels besonderer Halteringe gehalten. Eine einfache Montage der Formkörper ist auf diese Weise gegeben, da die Halteringe von den Enden der Hohlprofile bzw. des Führungsrohres her aufschiebbar sind, wodurch die Formkörper in den ihnen jeweils zugeordneten Ausnehmungen fixiert werden.

Gemäß den Merkmalen des Anspruchs 18 sind die Halteringe mit Ringanschlägen versehen, die zum formschlüssigen Übergreifen der Stirnseiten des Hohlprofils bzw. des Führungsrohres bestimmt sind. Diese Ringanschläge bilden unter anderem eine Aufschiebbegrenzung für die Halteringe. Sie erleichtern auf diesem Wege die Montage des erfindungsgemäßen Bauelements.

Die Merkmale der Ansprüche 19 und 20 sind auf die konstruktive Festlegung der Teilabschnitte des Verschiebeweges gerichtet. Jeder Teilabschnitt ist konstruktiv festgelegt, und zwar durch besondere Anschlagstege oder durch die Ringanschläge der Halteringe. Das Ende des Teilabschnitts eines Verschiebeweges ist somit gekennzeichnet durch ein Anliegen der genannten Anschlagstege bzw. der genannten Ringanschläge an entsprechenden, gegenüber diesen beweglichen Elementen des jeweils anderen Teiles.

Die Hohlprofile können entsprechend den Merkmalen des Anspruchs 21 aus einem plastisch verformbaren Werkstoff, z.B. Stahl, einer Aluminiumlegierung oder aus Kunststoff bestehen, welche in dem hier erforderlichen Ausmaß plastisch verformbar sein müssen. Die vorzugsweise kugelartigen Formkörper bestehen in jedem Fall aus einem höherfesten Werkstoff, z.B. Stahl, einer Aluminiumlegierung, Keramik oder Kunststoff. Bei den genannten Hohlprofilen kann das Verfestigungsverhalten metallischer Werkstoffe besonders vorteilhaft zur Einstellung einer progressiven Kraftaufnahmecharakteristik benutzt werden. Diese Maßnahme kann die eingangs dargelegten sonstigen werkstofflichen und geometrischen Maßnahmen zumindest unterstützen.

Die Merkmale der Ansprüche 23 und 25 sind auf Varianten der Kraftaufnahmecharakteristik eines Teilabschnitts des Verschiebeweges gerichtet. Grundsätzlich ist auf diesem Wege auch ein angenähert stetiger Verlauf der aufzuwendenden Umformkräfte erreichbar.

Das erfindungsgemäße, unter Energieabsorption längenveränderbar ausgebildete Bauelement findet vorzugsweise Anwendung im Rahmen einer Lenksäule, nämlich dem Lenkungsschutzrohr. Es ist auswechselbar in die Lenksäule eingebaut und ermöglicht aufgrund seiner oben dargelegten Beschaffenheit eine dem Belastungsfall angepaßte Umsetzung kinetischer Energie. Es zeichnet sich darüber hinaus aufgrund der Anordnung der Formkörper sowie deren Sicherung sowie der Bildung der den einzelnen Teilabschnitten des Verschiebeweges zugeordneten Umformabschnitte durch einen konstruktiven besonders einfachen Aufbau aus, der die Realisierung einer progressiven oder einer sonstigen, beliebig vorgebbaren durch konstruktive Parameter festlegbaren Charakteristik der Kraftaufnahme ermöglicht.

Die Erfindung wird im folgenden unter Bezugnahme auf das in den Zeichnungen schematisch wiedergegebene Ausführungsbeispiel näher erläutert werden. Es zeigen:
Fig. 1 einen Axialschnitt eines erfindungsgemäßen energieabsorbierend wirksamen Bauelements;
Fig. 2 eine Querschnittsdarstellung des Bauelements entsprechend einer Ebene II-II der Fig. 1;
Fig. 3 eine Querschnittsdarstellung entsprechend einer Ebene III-III der Fig. 1;
Fig. 4 eine vereinfachte Axialschnittdarstellung des Bauelements im unbeanspruchten Zustand;
Fig. 5 eine Darstellung des Bauelements gemäß Fig. 4 in einem, das erste der beiden Umformprofile beanspruchenden Zustand;
Fig. 6 eine Darstellung des Bauelements Fig. 4 in einem, beide Umformprofile beanspruchenden Zustand.

Das erfindungsgemäße Bauelement besteht aus zwei, im Querschnitt kreisförmigen und koaxial zueinander angeordneten und teilweise ineinandergeführten Hohlprofilen 1, 2, welche einen integralen Teil einer Stützstruktur, einer Haltevorrichtung oder auch eines sonstigen Funktionselements einer Fahrzeugstruktur, zum Beispiel eines Lenkungsschutzrohres bilden, innerhalb welchem eine zeichnerisch nicht dargestellte Lenkwelle geführt ist. Das Bauelement ist zur Kraftübertragung in Richtung seiner Achse 3 eingerichtet, wobei die Hohlprofile 1, 2 jedoch nach Überschreiten einer konstruktiv vorgegebenen Kraft unter Energieabsorption in einer im folgenden näher zu beschreibenden Weise weiter ineinandergeschoben werden. Ziel ist, über dieses Bauteil im Kollisionsfall des Fahrzeugs kinetische Energie irreversibel umzusetzen, um Schadwirkungen für Personen, jedoch auch das Fahrzeug im übrigen zu mindern.

Das Hohlprofil 2 ist an seinem einen, dem Hohlprofil 1 zugekehrten Ende mit zwei, einander diametral gegenüberliegenden kugelkalottenartigen, sich von der Außenseite radial einwärts erstreckenden Einformungen 4 versehen, in denen jeweils ein kugelförmiger Formkörper 5 aufgenommen ist. Mittels eines, die Einformungen 4 außenseitig symmetrisch überdeckenden Halteringes 6 werden die Formkörper 5 in ihrer Aufnahmeposition in den Einformungen 4 im wesentlich spielfrei gehalten.

Mit 7 sind einander diametral gegenüberliegende, an dem einen Ende 8 des Hohlprofils 1 befindliche radial einwärts orientierte Einformungen bezeichnet, die hinsichtlich ihrer Querschnittsgestalt an die Innenkontur der radial einwärts gerichteten Einformungen 4 des Hohlprofils 2 angepaßt sind und letztere aufnehmen. Die Einformungen 7 bilden in Verbindung mit den Einformungen 4 eine axiale Arretierung der teilweise ineinandergesteckten Hohlprofile 2, 4.

Mit 9 ist ein Führungsrohr bezeichnet, innerhalb welchem das Hohlprofil 2 teilweise aufgenommen ist und es steht das Führungsrohr 9 über ein, dieses außenseitig umgebendes Befestigungsteil 10 in zeichnerisch nicht dargestellter Weise mit der Karosserie des Fahrzeugs in fester Verbindung. Das Befestigungsteil 10 kann mit dem Führungsrohr 9 - wie in der Zeichnung angedeutet - verschweißt sein.

Mit 11 sind zwei, in die Außenseite des Führungsrohres 9 eingeprägte, einander diametral gegenüberliegende, kugelkalottenartige weitere Einformungen bezeichnet, die jeweils der Aufnahme eines weiteren kugelförmigen Formkörpers 12 dienen. Diese, sich radial einwärts erstreckenden Einformungen 11 sind in entsprechend gestalteten Einformungen des Hohlprofils 2 aufgenommen und es werden die Formkörper 12 mittels eines diese radial außenseitig symmetrisch überdeckenden Halteringes 13 in ihren Einformungen 11 im wesentlichen spielfrei gehalten.

Durch die sowohl das Führungsrohr 9 als auch das Hohlprofil durchdringenden kugelkalottenartigen Einformungen 11 ist das Hohlprofil 2 gegenüber dem Fahrgestellrahmen axial formschlüssig gesichert.

Das Führungsrohr 9 sowie die Hohlprofile 1, 2 können aus einer Aluminiumlegierung bestehen, wohingegen die Formkörper 2 sowie die diese fixierenden Halteringe 6, 13 aus Stahl oder einem Metall mit vergleichbaren Festigkeitseigenschaften bestehen.

Es sind die Abmessungen der Einformungen 11 sowie der Formkörper 12 deutlich größer als diejenigen der Einformungen 4 sowie der Formkörper 5 ausgelegt. Dies ist jedoch keine in allen Fällen notwendige Maßnahme.

Die Systeme der Einformungen 4, 11 bilden jeweils Umformabschnitte 5', 12', die im Falle einer Kraftübertragung in Richtung der Achse 3 nach Art einer plastischen Verformung beansprucht werden.

Entsprechend bilden die, durch die Halteringe 6, 13 fixierten Anordnungen von Formkörpern jeweils Umformprofile, die mit den Umformabschnitten 5', 12' radial außenseitig im Umformeingriff stehen.

Wesentlich ist in diesem Zusammenhang, daß die Umformprofile in konstruktiver Weise derart bemessen sind, daß diese bei unterschiedlichen, in Richtung der Achse 3 wirksamen Kräften wirksam werden, somit unterschiedliche Kraftaufnahmecharakteristika aufweisen, aus deren Überlagerung sich eine progressive Charakteristik der infolge einer Relativbewegung der Hohlprofile 1, 2 zueinander stattfindenden Energieabsorption gegeben ist.

Der maximale Verschiebeweg, um den das Bauelement längenveränderbar ist, setzt sich additiv aus zwei Teilabschnitten zusammen, nämlich einem ersten Teilabschnitt, welcher der Verschiebung des Hohlprofils 1 gegenüber dem Hohlprofil 2 entspricht und einem zweiten Teilabschnitt, welcher der Verschiebung des Hohlprofils 2 gegenüber dem Führungsrohr 9 entspricht. Dem ersten Teilabschnitt ist der Umformabschnitt 5' mit dem, durch die Formkörper 5 gebildeten Umformprofil und dem zweiten Teilabschnitt der Umformabschnitt 12' mit dem, durch die Formkörper 12 gebildeten Umformprofil zugeordnet.

In der Einbauposition dieses Bauelements erfolgt der Kraftfluß von dem Hohlprofil 1 über den Umformabschnitt 5' auf das Hohlprofil 2 und von diesem über den Umformabschnitt 12' auf das Führungsrohr 9 bzw. das Befestigungsteil 10.

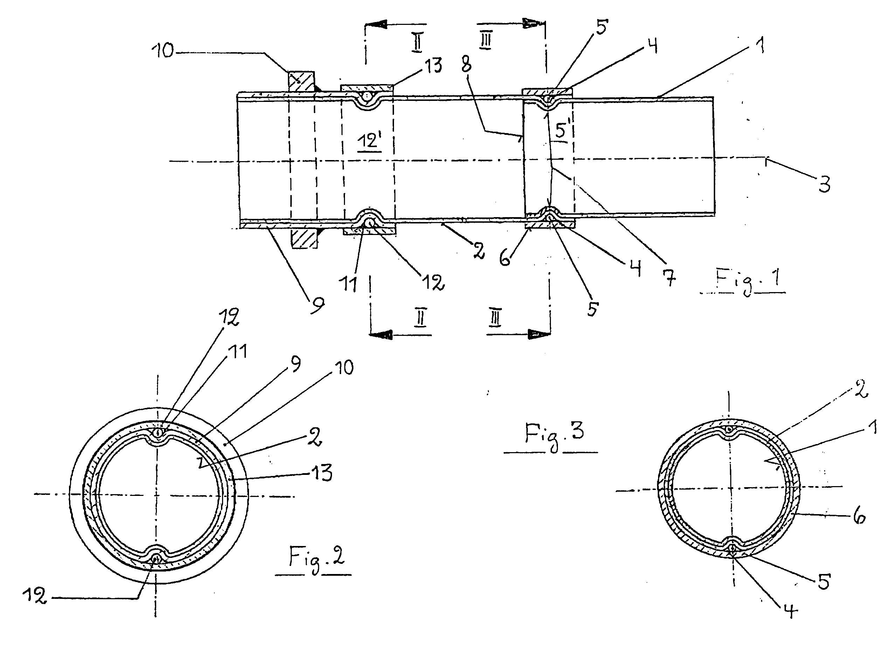

Zur Erläuterung der Wirkungsweise dieses Bauelements wird im folgenden auf die Zeichnungsfig. 4 bis 6 Bezug genommen, in denen Funktionselemente, die mit denjenigen der Fig. 1 bis 3 übereinstimmen, entsprechend beziffert sind, so daß auf eine diesbezügliche wiederholte Beschreibung verzichtet werden kann.

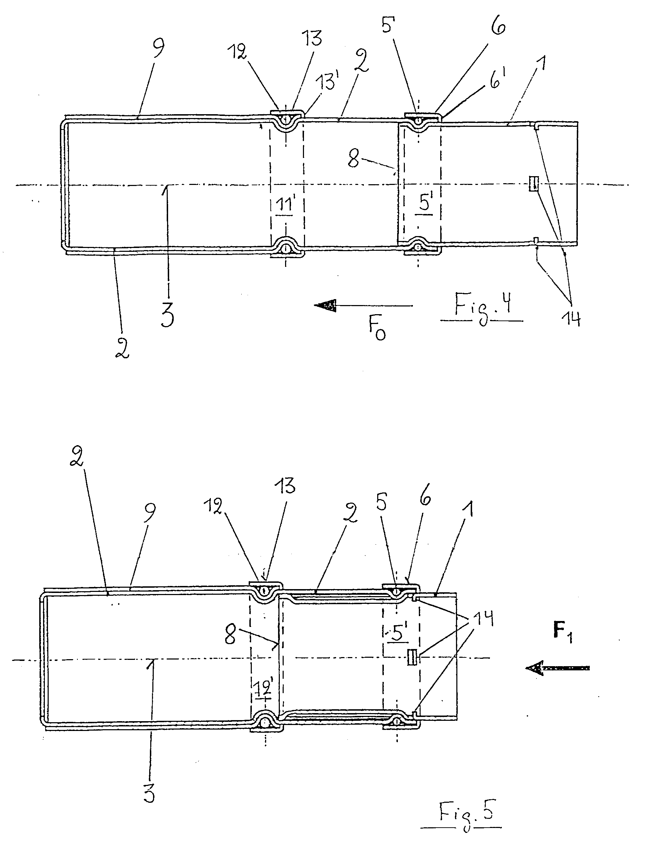

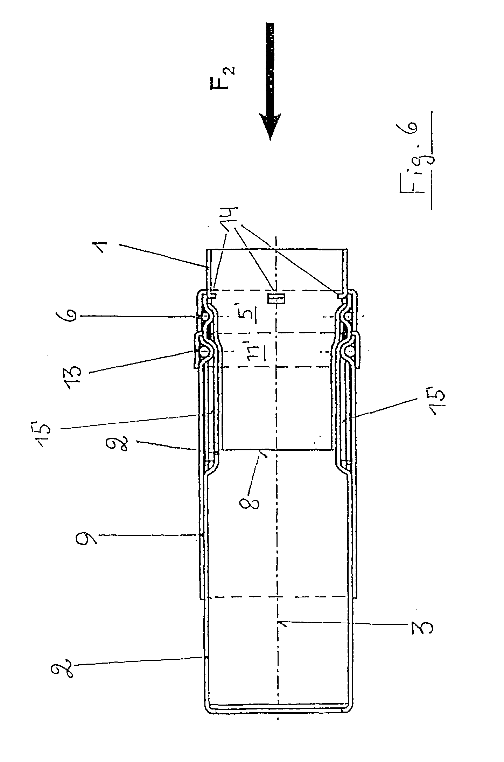

Die in den Fig. 4 bis 6 gezeigten Halteringe 6, 13 sind von dem jeweils einen freien Ende des Hohlprofils 2 sowie des Führungsrohres 9 her auf diese aufgeschoben und an ihrer, der Stirnseite des Hohlprofils 2 bzw. des Führungsrohres 9 zugekehrten Seite mit einem sich radial einwärts erstreckenden Ringanschlag 6', 13' versehen, an welchem das jeweilige stirnseitige Ende des Hohlprofils 2 bzw. des Führungsrohres 9 anliegen.

Mit 14 sind sich jeweils radial einwärts erstreckende, den Verschiebeweg des Hohlprofils 1 gegenüber dem Hohlprofil 2 begrenzende, in gleichförmiger Umfangsverteilung vorliegende Anschlagstege bezeichnet, die durch teilweises Ausstanzen und radial einwärts orientiertes Biegen eines Wandungsabschnitts einfach herstellbar sind. Grundsätzlich kommen jedoch auch andere Formen eines Anschlags in Betracht, durch welche der genannte Verschiebeweg begrenzbar ist.

Die Umformprofile sind derart bemessen, daß eine Kraft F₀ über das Hohlprofil 1 auf das Hohlprofil 2 und auf das mit der Karosserie in Verbindung stehende Führungsrohr 9 übertragen werden kann, ohne daß eine Relativbewegung zwischen den Hohlprofilen 1, 2 bzw. dem Hohlprofil 2 und dem Führungsrohr 9 stattfindet.

Wird das Bauelement hingegen mit einer Kraft F₁ > F₀ belastet, wird der erste Umformabschnitt 5' wirksam. Die Belastung mit dieser Kraft F₁ führt zu einer Relativbewegung des Hohlprofils 2 gegenüber dem Hohlprofil 1, als dessen Folge die Einformungen 7 nutartig verlängert werden, wobei eine solche Bewegung nach Maßgabe der weiteren Belastung mit einer Kraft F₁ fortgesetzt wird, bis das Ende des durch die Anschlagstege 14 definierten Teilabschnitts des Verschiebeweges erreicht ist. Die Bewegung entlang dieses Teilabschnitts ist mit einer gleichförmig aufzuwendenden Kraft verbunden, die somit irreversibel in Umformenergie umgesetzt wird.

Am Ende dieses ersten Teilabschnitts ist das Bauelement hinsichtlich einer weiteren Relativbewegung, etwa des Führungsrohres 9 gegenüber dem Hohlprofil 2 zunächst gesichert. Das Ende dieses Teilabschnitts des Verschiebeweges ist dadurch gekennzeichnet, daß das durch die Formkörper 12 gebildete Umformprofil an dem Ende 8 des Hohlprofils 1 anliegt.

Sobald das Bauelement jedoch mit einer in Richtung der Achse 3 wirkenden Kraft F₂ > F₁ belastet wird, kommt es in der Folge zu einer Verschiebung des Hohlprofils 2 gegenüber dem Führungsrohr 9, als dessen Folge die eingangs kugelkalottenartigen außenseitigen Einformungen des Hohlprofils 2 ebenfalls zu nutartigen Einformungen 15 erweitert werden, wobei dieser Verformungsvorgang gleichermaßen die in dem Hohlprofil 1 bereits erzeugten nutartigen Einformungen 7 erfaßt und diese nach Maßgabe der Größenverhältnisse der Formkörper 12 und der Formkörper 5 erweitert. Der zuletzt genannte Umformvorgang ist somit durch ein gleichzeitiges Umformen beider Hohlprofile 1, 2 gekennzeichnet.

Begrenzt wird der letztgenannte Teilabschnitt des Verschiebeweges durch den ursprünglichen Abstand der Halteringe 6, 13 voneinander und es ist das Ende dieses Teilabschnitts durch ein stirnseitiges Aneinanderliegen der beiden Halteringe 6, 13 gekennzeichnet.

Bei dem vorstehend beschriebenen Ausführungsbeispiel ist davon ausgegangen worden, daß die Formkörper 5, 12 im Rahmen der beiden Umformprofile axial fluchtend zueinander angeordnet sind. Dies ist lediglich eine mögliche Konstruktionsvariante zur Bemessung der dem Umformabschnitt 12' zuzuordnenden Umformkraft. Hierzu sind jedoch zahlreiche Varianten vorstellbar, deren Zweck darin besteht, letztgenannte Umformkraft bedarfsgerecht, das heißt nach Maßgabe einer entlang des gesamten Verschiebeweges progressiven Charakteristik einzustellen.

Dadurch, daß die Formkörper 12 größer als die Formkörper 5 bemessen sind, jedoch auch dadurch, daß der letztgenannte Umformvorgang gleichermaßen beide Hohlprofile erfaßt, ist dieser Umformvorgang durch eine erheblich höhere, entlang dieses Teilabschnitts gleichförmige Kraftaufnahme gekennzeichnet, so daß durch das System der beiden Umformprofile - entlang des Verschiebeweges gesehen - eine progressive, abgestufte Charakteristik der Energieabsorption gegeben ist. Innerhalb des, durch die Verschiebung des Hohlprofils 1 gegenüber dem Hohlprofil 2 und des Hohlprofils 2 gegenüber dem Führungsrohr 9 gegebenen gesamten Verschiebeweges und nach Maßgabe der, sich aus der Beschaffenheit der Umformprofile und der eingesetzten Werkstoffe ergebenden maximalen Energieabsorptionsfähigkeit kann durch dieses Bauelement somit eine, dem Belastungsfall angepaßte kinetische Energie entlang eines definierten Weges absorbierende Gegenkraft entwickelt werden, durch welche Schadwirkungen eines kollisionsbedingten Stoßes aufgefangen werden können.

Das Bauelement kann mit Vorteil an allen den Stellen eines Kraftfahrzeugs eingesetzt werden, bei denen im Kollisionsfall Verletzungsgefahren für Personen oder erheblicher Sachschaden zu erwarten ist und bei denen die im Kollisionsfall umzusetzende kinetische Energie in gesteuerter Weise absorbiert werden soll. Vorzugsweise, jedoch nicht ausschließlich findet dieses Bauteil im Rahmen der Lenksäule, beispielsweise des Lenkungsschutzrohres Verwendung.

## Patentansprüche

1. Unter Energieabsorption nach Maßgabe eines definierten Verschiebeweges längenveränderbares, für den Fahrzeugbau bestimmtes und zur Übertragung von Kräften in Richtung seiner Achse (3) eingerichtetes Bauelement, mit wenigstens zwei, zur Energieabsorption durch plastische Verformung eingerichteten, jeweils nach Durchlaufen definierter Teilabschnitte des gesamten Verschiebeweges wirksam werdenden Umformabschnitten (5', 12'), wobei zur plastischen Verformung jedem Umformabschnitt (5',12') wenigstens ein Umformprofil zugeordnet ist, auf dessen Relativbewegung gegenüber dem Umformabschnitt die Energieabsorption beruht, wobei den Umformabschnitten (5',12') unterschiedliche Umformkräfte zugeordnet sind, wobei wenigstens zwei, zumindest teilweise ineinandergeführte Hohlprofile (1,2) vorgesehen sind, und wobei ein erster, einem ersten Teilabschnitt des Verschiebeweges zugeordneter Umformabschnitt (5') durch die Außenseite eines ersten Hohlprofils (1) gebildet ist,
dadurch gekennzeichnet,
- daß ein zweiter und sämtliche weiteren Umformabschnitte ausschließlich durch die Außenseiten von Hohlprofilen (1,2) gebildet wird/werden und
- daß jedes Umformprofil ausschließlich mit der Außenseite des jeweiligen Umformabschnitts (5',12') im Umformeingriff steht.

2. Bauelement nach Anspruch 1,
dadurch gekennzeichnet,
- daß zumindest ein zweiter Umformabschnitt (12') durch eine ineinandergesteckte Anordnung des ersten und eines zweiten Hohlprofils (2) gebildet ist.

3. Bauelement nach Anspruch 1 oder 2,
dadurch gekennzeichnet,
- daß ein dritter bzw. nter Umformabschnitt durch eine ineinandergesteckte Anordnung des ersten bis dritten Hohlprofils bzw. des ersten bis nten Hohlprofils gebildet ist.

4. Bauelement nach einen der Ansprüche 1 bis 3,
dadurch gekennzeichnet,
- daß - entlang des gesamten Verschiebeweges gesehen - die Umformabschnitte mit der Maßgabe angeordnet sind, daß sie nacheinander mit dem wenigstens einen, ihnen zugeordneten Umformprofil in Eingriff gelangen.

5. Bauelement nach einen der Ansprüche 1 oder 3,
dadurch gekennzeichnet,
- daß - entlang des gesamten Verschiebeweges gesehen - die Umformabschnitte mit der Maßgabe angeordnet sind, daß sie mit dem wenigstens einen, ihnen zugeordneten Umformprofil zumindest teilweise gleichzeitig in Eingriff gelangen.

6. Bauelement nach einem der vorangegangenen Ansprüche 1 bis 5,
dadurch gekennzeichnet,
- daß jedes Umformprofil durch wenigstens einen Formkörper (5, 12) gebildet ist, der während der plastischen Verformung des zugeordneten Umformabschnitts (5',12') gegenüber diesem ortsfest gehalten ist.

7. Bauelement nach Anspruch 6,
dadurch gekennzeichnet,
- daß ein Umformprofil durch wenigstens eine, in einer zu der Achse (3) der Hohlprofile senkrechten Ebene plazierten Anordnung mehrerer Formkörper (5,12) gebildet ist.

8. Bauelement nach Anspruch 6 oder 7,
dadurch gekennzeichnet
- daß die Formkörper (5,12) sämtlicher Umformprofile eine gleiche Größe aufweisen.

9. Bauelement nach einem der Ansprüche 6 bis 8,
dadurch gekennzeichnet,
- daß sämtliche Umformprofile die gleiche Anzahl an Formkörpern (5,12) aufweisen.

10. Bauelement nach einem der Ansprüche 1 bis 9,
dadurch gekennzeichnet,
- daß die Umformabschnitte (5',12') nebst zugeordneter Umformprofile entlang des Verschiebeweges mit der Maßgabe angeordnet sind, daß sich - vom Anfangspunkt des gesamten Verschiebeweges an gesehen - eine Zunahme der aufzuwendenden Umformkräfte ergibt.

11. Bauelement nach einem der Ansprüche 1 bis 9,
dadurch gekennzeichnet,
- daß die Umformabschnitte nebst zugehöriger Umformprofile entlang des Verschiebewagens mit der Maßgabe angeordnet sind, daß sich - vom Anfangspunkt des Verschiebewagens an gesehen - eine Abnahme der aufzunehmenden Umformkräfte ergibt.

12. Bauelement nach einem der Ansprüche 6 bis 8 oder 10,
dadurch gekennzeichnet,
- daß die Umformprofile - in Richtung des gesamten Verschiebeweges gesehen - eine zunehmende Zahl an Formkörpern aufweisen.

13. Bauelement nach einem der Ansprüche 1 bis 10 oder 12,
dadurch gekennzeichnet,
- daß die Wanddicken der Hohlprofile - in Richtung des gesamten Verschiebeweges gesehen - zunehmend ausgebildet sind.

14. Bauelement nach einem der vorangegangenen Ansprüche 1 bis 10 oder 12, 13,
dadurch gekennzeichnet
- daß die Werkstoffe der Hohlprofile - in Richtung des gesamten Verschiebeweges gesehen - nach Maßgabe zunehmender Umformkräfte gewählt sind.

15. Bauelement nach einem der vorangegangenen Ansprüche 1 bis 10 oder 12 bis 14,
dadurch gekennzeichnet,
- daß der Wanddickenverlauf wenigstens eines Hohlprofils - in Richtung des gesamten Verschiebeweges gesehen - einen zunehmenden Verlauf aufweist.

16. Bauelement nach einem der Ansprüche 6 bis 15,
dadurch gekennzeichnet,
- daß die Formkörper (5,12) in entsprechend bemessene, radial außenseitig offene Einformungen entweder eines Hohlprofils (2) oder eines Führungsrohres (9) eingesetzt und in diesen Einformungen mittels Halteringen (6,13) im wesentlichen spielfrei gehalten sind.

17. Bauelement nach Anspruch 16, dadurch gekennzeichnet,
- daß sich die Einformungen jeweils vorzugsweise an den Enden des Hohlprofils (2) bzw. des Führungsrohres (9) befinden und
- daß die Halteringe (6,13) von den Enden her auf das Hohlprofil (2) bzw. das Führungsrohr (9) aufschiebbar sind.

18. Bauelement nach Anspruch 17,
dadurch gekennzeichnet,
- daß die Halteringe (6,13) mit Ringanschlägen (6',13') zum formschlüssigen Übergreifen der Stirnseiten des Hohlprofils (2) bzw. des Führungsrohres (9) versehen sind.

19. Bauelement nach einem der Ansprüche 1 bis 18,
dadurch gekennzeichnet,
- daß ein erster Teilabschnitt des gesamten Verschiebeweges einseitig durch Anschlagstege (14) des Hohlprofils (1) begrenzt ist, welche zum Zusammenwirken mit den, dem ersten Umformabschnitt (5') zugeordneten Umformprofil bestimmt und angeordnet sind.

20. Bauelement nach Anspruch 19,
dadurch gekennzeichnet,
- daß ein zweiter und jeder weitere Teilabschnitt des Verschiebeweges einseitig durch Ringanschläge (13') der Halteringe (13) begrenzt ist.

21. Bauelement nach einem der vorangegangenen Ansprüche 3 bis 20,
dadurch gekennzeichnet,
- daß die Hohlprofile (1,2) und das Führungsrohr (9) aus einem plastisch verformbaren Werkstoff wie z.B. Stahl, Aluminium oder Kunststoff bestehen und
- daß die Halteringe (6,13) und die Formkörper (5,12) aus einem im Vergleich zum Werkstoff der Hohlprofile höherfesten Werkstoff wie z.B. Stahl, Aluminium, Keramik oder Kunststoff bestehen.

22. Bauelement nach einem der vorangegangenen Ansprüche 1 bis 21,
gekennzeichnet durch eine Verwendung als integraler Bestandteil der Lenksäule eines Kraftfahrzeugs, insbesondere des Lenkungsschutzrohres.

23. Bauelement nach einem der Ansprüche 1 bis 22,
dadurch gekennzeichnet,
- daß der Umformabschnitt zumindest eines Teilabschnitts des gesamten Verschiebeweges mit der Maßgabe ausgestaltet ist, daß sich entlang dieses Teilabschnitts ein konstanter Verlauf der aufzuwendenden Umformkräfte ergibt.

24. Bauelement nach einem der vorangegangenen Ansprüche 1 bis 10 oder 12 bis 23,
dadurch gekennzeichnet,
- daß der Umformabschnitt zumindest eines Teilabschnitts des Verschiebeweges mit der Maßgabe ausgestaltet ist, daß sich entlang dieses Teilabschnitts ein ansteigender Verlauf der aufzuwendenden Umformkräfte ergibt.

25. Bauelement nach einem der vorangegangenen Ansprüche 1 bis 9, 11 oder 16 bis 23,
dadurch gekennzeichnet,
- daß der Umformabschnitt zumindest eines Teilabschnitts des Verschiebeweges mit der Maßgabe ausgestaltet ist, daß sich entlang dieses Teilabschnitts ein abfallender Verlauf der aufzuwendenden Umformkräfte ergibt.
